# EUROPÄISCHE PATENTANMELDUNG

(11) **EP 1 391 861 A2**
(43) Veröffentlichungstag der Anmeldung: **25.02.2004**
(21) Anmeldenummer: 03018402.2
(22) Anmeldetag: 13.08.2003
(51) Int. Cl.: G08C 17/02

(54) **Kommunikationssystem und Verfahren zur Datenübertragung, insbesondere zur Überwachung und Steuerung eines oder mehrerer Geräte**

(30) Priorität: 13.08.2002 DE 10237150
(71) Anmelder: O2(Germany) GmbH & Co. OHG, 80992 München (DE)
(72) Erfinder: Bielski, Robert, 85586 Poing (DE)
(74) Vertreter: Herrmann, Uwe

(57) **Zusammenfassung**

Die vorliegende Erfindung betrifft ein Kommunikationssystem zur Datenübertragung von und/oder zu einem oder mehreren Geräten, insbesondere zur Überwachung, Steuerung und/oder Regelung eines oder mehrerer Geräte, wobei das Kommunikationssystem die folgenden Komponenten umfaßt: wenigstens eine Kontrolleinheit die mit dem oder den Geräten verkabelt ist oder drahtlos in Verbindung steht, wobei die Verbindung derart ausgeführt ist, daß von der Kontrolleinheit zu dem oder den Geräten und/oder von dem oder den Geräten zu der Kontrolleinheit Daten übertragbar sind, wenigstens eine Kommunikationseinheit, die mit der Kontrolleinheit derart in Verbindung steht, daß Daten zwischen beiden Einheiten übertragbar sind, und mittels derer Daten an einen Netzbetreiber eines Telekommunikationsnetzes übertragbar und/oder von dem Netzbetreiber übertragene Daten empfangbar sind, wenigstens ein in dem Telekommunikationsnetz des Netzbetreibers betreibbares mobiles Endgerät, sowie Mittel, durch die auf der Grundlage der von der Kommunikationseinheit an den Netzbetreiber übertragenen Daten Daten von dem Netzbetreiber an das mobile Endgerät und/oder durch die Daten von dem mobilen Endgerät an den Netzbetreiber übermittelbar sind, auf deren Grundlage Daten an die Kommunikationseinheit übertragen werden.

Die vorliegende Erfindung betrifft ferner ein Verfahren zur Datenübertragung, insbesondere zur Überwachung, Steuerung und/oder Regelung eines oder mehrerer Geräte mittels einem in einem Telekommunikationsnetz eines Netzbetreibers betreibbaren mobilen Endgerätes.

## Beschreibung

Die vorliegende Erfindung betrifft ein Kommunikationssystem sowie ein Verfahren zur Datenübertragung, insbesondere zur Überwachung, Steuerung und/oder Regelung eines oder mehrerer Geräte.

Sowohl in privaten Haushalten, als auch in Firmen, Büros etc. besteht das Bedürfnis, Geräte wie beispielsweise den Herd, Alarmanlagen, Videoüberwachungsanlagen zu überwachen oder aktiv zu steuern bzw. zu regeln.

Die Überwachung von Geräten mittels einer Funkverbindung zwischen dem zu überwachenden Gerät und der Überwachungseinheit ist aus unterschiedlichen Bereichen bekannt. Ein Nachteil derartiger Überwachungsvorrichtungen besteht darin, daß die Entfernung zwischen der Überwachungseinheit und dem zu überwachenden Gerät in der Regel sehr beschränkt ist und daß sich der Bediener vor der Überwachungseinheit aufhalten muß, um die entsprechende Beobachtung des Gerätes vornehmen zu können. Bei einem Ortswechsel des Bedieners ist die Überwachung des Gerätes dementsprechend unmöglich oder zumindest erschwert.

Es ist daher die Aufgabe der vorliegenden Erfindung ein Kommunikationssystem der eingangs genannten Art dahingehend weiterzubilden, daß dieses auch über größere Entfernungen und unabhängig vom Aufenthaltsort des Bedieners einsetzbar ist.

Diese Aufgabe wird durch ein Kommunikationssystem zur Datenübertragung von und/oder zu einem oder mehreren Geräten, insbesondere zur Überwachung, Steuerung und/oder Regelung eines oder mehrerer Geräte, gelöst, das die folgenden Komponenten umfaßt:
- wenigstens eine Kontrolleinheit, die mit dem oder den Geräten verkabelt ist oder drahtlos in Verbindung steht, wobei die Verbindung derart ausgeführt ist, daß von der Kontrolleinheit zu dem oder den Geräten und/oder von dem oder den Geräten zu der Kontrolleinheit Daten übertragbar sind,
- wenigstens eine Kommunikationseinheit, die mit der Kontrolleinheit derart in Verbindung steht, daß zwischen beiden Einheiten Daten übertragbar sind, und mittels derer Daten an einen Netzbetreiber eines Telekommunikationsnetzes übertragbar und/oder von dem Netzbetreiber übertragene Daten empfangbar sind,
- mindestens ein in dem Telekommunikationsnetz des Netzbetreibers betreibbares mobiles Endgerät
- sowie Mittel, durch die auf der Grundlage der von der Kommunikationseinheit an den Netzbetreiber übertragenen Daten Daten von dem Netzbetreiber an das mobile Endgerät und/oder durch die Daten von dem mobilen Endgerät an den Netzbetreiber übermittelbar sind, auf deren Grundlage Daten an die Kommunikationseinheit übertragen werden.

Unter Datenübertragung wird die Übertragung von oder zu dem oder den Geräten verstanden, sowie auch die bidirektionale Datenübertragung von und zu dem oder den Geräten.

Insbesondere die Datenübertragung zwischen Kommunikationseinheit und Netzbetreiber kann unmittelbar oder auch mittelbar erfolgen.

Das erfindungsgemäße Kommunikationssystem ermöglicht es, über große Entfernungen dem Besitzer eines mobilen Endgerätes, beispielsweise dem Benutzer eines Mobiltelefons, die Überwachung von beispielsweise im Haushalt, in einer Firma oder einem Büro vorhandenen Geräten vorzunehmen und/oder aktiv steuernd bzw. regelnd mittels des mobilen Endgerätes einzugreifen. Als Beispiele für die zu überwachenden, zu steuernden bzw. zu regelnden Geräte lassen sich im Bereich des Haushalts der Herd, Kühlschrank, der Sicherungskasten, das Licht, das Rollo, die Garagentür, die Alarmanlage einer Videoüberwachungsanlage etc. nennen. Im Bereich von Firmen sind Daten über beispielsweise Chemieanlagen, Kraftwerkskomponenten übermittelbar bzw. derartige Anlagen oder Geräte steuerund/oder regelbar. Entsprechendes gilt für in Büros vorhandenen Geräte, wie beispielsweise Alarmanlagen.

Die Art und Anordnung der zu überwachenden bzw. zu steuernden oder zu regelnden Geräte oder Einrichtungen ist nicht beschränkt. So ist es beispielsweise denkbar, daß das Gerät beweglich angeordnet ist (z. B. Kaffeemaschine) oder in einer mobilen Einheit (z. B. im Auto, Zug, Flugzeug) oder auch nicht beweglich angeordnet ist (z. B. Sicherungskasten im Haus).

Die vorliegende Erfindung ermöglicht die passive Unterrichtung des Bedieners des mobilen Endgerätes über den Status der zu überwachenden Geräte. Ebenso kann zusätzlich oder alternativ vorgesehen sein, daß die Geräte mittels des Kommunikationssystems gesteuert bzw. geregelt werden. Grundsätzlich ist das Kommunikationssystem zum Datenaustausch zu beliebigen Zwecken einsetzbar.

Die von/an die Kommunikationseinheit übertragenen Daten können denen entsprechen, die zwischen Netzbetreiber und dem mobilen Endgerät übertragen werden. Beispielsweise können die zwischen Kontrolleinheit und Kommunikationseinheit, Kommunikationseinheit und Netzbetreiber sowie zwischen Netzbetreiber und mobilem Endgerät übertragenen Daten identisch sein. Auch ist es möglich, daß eine Datenmodifikation stattfindet oder daß aufgrund der empfangenen Daten ein zugehöriger Datensatz ausgewählt wird, der dann weiterübertragen wird.

Die Datenübertragung zwischen den Komponenten des Systems kann unmittelbar oder mittelbar durch Zwischenschaltung weiterer Komponenten und/oder weiterer Netzbetreiber erfolgen. Beispielsweise ist es möglich, daß die Datenübertragung von der Kommunikationseinheit an einen ersten Netzbetreiber erfolgt und die Datenübertragung an das mobile Endgerät mittels eines zweiten Netzbetreibers vorgenommen wird. Als weitere Komponente, die der Datenübertragung zwischengeschaltet sein kann, ist insbesondere das Internet zu nennen.

Die Verbindung zwischen der Kontrolleinheit und dem oder den Geräten kann mittels Verkabelung, Bluetooth oder WLAN erfolgen. Die beiden letztgenannten Übertragungsmöglichkeiten sind aufgrund ihrer drahtlosen Übertragung besonders vorteilhaft einsetzbar. Hinzu kommt, daß auch schwierige Übertragungsbedingungen, wie beispielsweise aufgrund von im Haus vorgesehenen Wänden zwischen dem Gerät und der Kontrolleinheit, die Übertragung nicht oder nur unwesentlich behindern. Grundsätzlich ist bei Sichtverbindung zwischen der Kontrolleinheit und dem zu überwachenden Gerät beispielsweise auch die Datenübertragung per Infrarot denkbar.

Die Kontrolleinheit kann als Überwachungseinheit ausgeführt sein, die Daten von dem oder den Geräten empfängt und an die Kommunikationseinheit weiterleitet. Alternativ oder zusätzlich kann vorgesehen sein, daß die Kontrolleinheit als Steuereinheit ausgeführt ist, die Daten zum Zwecke der Steuerung an das oder die Geräte überträgt, oder daß die Kontrolleinheit als Regeleinheit ausgeführt ist, die Istwerte von dem oder den Geräten empfängt und mit Sollwerten vergleicht und bei Abweichung die Regelabweichung verringernde Daten an das oder die Geräte übermittelt. Die Sollwerte können mittels des erfindungsgemäßen Systems an die Kontrolleinheit übermittelt werden, wobei der Bediener diese auf seinem mobilen Endgerät eingibt und diese sodann mittels des erfindungsgemäßen Kommunikationssystems übertragen werden. Die Übermittlung der Sollwerte kann bis zu der Kontrolleinheit und nicht bis zum Gerät selbst erfolgen. Die Kontrolleinheit nimmt aufgrund der übermittelten Sollwerte die Regelung vor. Der Datenaustausch zwischen Kontrolleinheit und dem oder den Geräten bezieht sich in diesem Fall auf die Regelung betreffende Daten. Alternativ ist auch möglich, daß die Sollwerte an das Gerät übertragen werden und hier mittels einer Regelungsvorrichtung die entsprechende Einstellung der Istwerte vorgenommen wird.

Grundsätzlich ist es auch möglich, daß die Kontrolleinheit im Gerät integriert ist. Handelt es sich bei dem Gerät beispielsweise um ein Herd, kann vorgesehen sein, daß die Kontrolleinheit als im Herd angeordnete Regeleinheit ausgeführt ist, die die Temperaturregelung übernimmt.

Alternativ oder zusätzlich kann die Kommunikationseinheit im Gerät integriert sein.

Bei einer Ausführung, bei der sowohl Kontroll- als auch Kommunikationseinheit im Gerät integriert sind, kann auf eine externe Kontroll- und/oder Kommunikationseinheit verzichtet werden.

Grundsätzlich sind auch Anordnungen möglich, bei denen ein Teil der Geräte integrierte Kontroll- und/oder Kommunikationseinheiten aufweist, während andere Geräte mittels einer externen Kontroll- und/oder Kommunikationseinheit in Verbindung stehen.

Ebenfalls ist es möglich, daß der Bediener nicht auf die Regelung Einfluß nimmt, sondern mittels des mobilen Endgerätes über den Regelungserfolg, d.h. aktuelle Ist- und Sollwerte etc. unterrichtet wird.

Die Kontrolleinheit und die Kommunikationseinheit können eine bauliche Einheit bilden. Sie sind vorzugsweise im Gebäude angeordnet und stehen über die genannten Verbindungsmöglichkeiten mit dem oder den Geräten in Verbindung.

In weiterer Ausgestaltung der vorliegenden Erfindung ist vorgesehen, daß die Kommunikationseinheit eine Sende- und/oder Empfangseinheit aufweist, mittels derer die Daten über das Festnetz oder über ein Mobilfunknetz gesendet und/oder empfangen werden können. Die Kommunikationseinheit kann als Modem ausgeführt sein, das über das Festnetz Daten sendet und/oder empfängt. Auch die Zwischenschaltung des Internets ist denkbar. Grundsätzlich sind beliebige Datenübertragungstechniken einsetzbar.

In bevorzugter Ausgestaltung der vorliegenden Erfindung ist die Sende- und/oder Empfangseinheit derart ausgeführt, daß sie Daten über ein Mobilfunknetz sendet oder empfängt, wobei das Mobilfunknetz nach dem GSM-, GPRS- oder UMTS-Standard arbeitet. Neben den genannten Techniken sind auch andere/neue Standards bzw. Datenübertragungstechniken einsetzbar. Das Mobilfunknetz muß nicht zwingend dem Mobilfunknetz entsprechen, in dem das mobile Endgerät betrieben wird.

Die Sende- und/oder Empfangseinheit kann derart ausgeführt sein, daß eine Verbindung zwischen der Kommunikationseinheit und dem Netzbetreiber unmittelbar mittels des Mobilfunknetzes oder per Festnetz oder mittelbar unter Zwischenschaltung des Internet herstellbar ist. Denkbar ist, daß die Kommunikationseinheit unmittelbar per Mobilfunk oder per Festnetz mit dem Netzbetreiber kommuniziert. In bevorzugter Ausgestaltung der Erfindung wird die Kommunikationseinheit wie ein mobiles Endgerät in einem Mobilfunknetz identifiziert und es erfolgt der Verbindungsaufbau und Datenaustausch zwischen Kommunikationseinheit und dem Netz wie bei mobilen Endgeräten, die in einem Mobilfunknetz eines Netzbetreibers betrieben werden.

Die Erfindung ermöglicht, daß einzelne Geräte durch entsprechende Adressierung gezielt angesteuert bzw. deren Daten abgefragt werden können.

Die Kommunikation zwischen Kommunikationseinheit und dem Netzbetreiber kann auch unter Zwischenschaltung des Internet erfolgen. Die Anbindung der Kommunikationseinheit an das Internet ist mittels Festnetz oder auch mittels Mobilfunk, insbesondere mittels WAP oder GPRS, realisierbar. Entsprechendes gilt für die Anbindung des Netzbetreibers an das Internet. Auch hier ist eine unmittelbare Anbindung mittels Festnetz oder ebenfalls per Mobilfunk denkbar.

In weiterer Ausgestaltung der vorliegenden Erfindung ist vorgesehen, daß eine Sende- und/oder Empfangseinheit vorgesehen ist, mittels derer der Netzbetreiber die Daten per Festnetz oder mittels eines Mobilfunknetzes von der Kommunikationseinheit empfängt und/oder an diese überträgt.

Dabei kann die Sende- und/oder Empfangseinheit des Netzbetreibers Mittel zum Anschluß eines GPRS-Systems an das Internet oder an ein beliebiges Fest- oder Mobilfunknetz aufweisen. Das GPRS-System kann mittels SGSN/GGSN an das genannte Netz angeschlossen sein.

Ferner können Mittel zum Anschluß eines GPRS-Systems an ein GSM-System vorgesehen sein. Hierzu dient vorzugsweise ein SGSN, mittels dessen der Anschluß einer GPRS-Infrastruktur an ein GSM-System erfolgt.

Es ist auch möglich, daß die Kommunikation von der Kommunikationseinheit zu dem mobilen Endgerät im Netz nur eines Netzbetreibers erfolgt.

Das mobile Endgerät kann nach dem GSM-Standard arbeiten. Selbstverständlich ist auch beim Betrieb des Endgerätes der GPRS-Standard, der UMTS-Standard oder ein sonstiger beliebiger anderer Standard bzw. Datenübertragungstechnik zur Übertragung der gewünschten Daten denkbar.

In weiterer Ausgestaltung der vorliegenden Erfindung können Mittel vorgesehen sein, mittels derer in Zeitabständen oder bei Auftreten besonderer Betriebszustände des oder der Geräte eine Statusmeldung über den Gerätezustand an das mobile Endgerät übermittelt wird. Dadurch ist es möglich, den Bediener des mobilen Endgerätes entweder in beispielsweise regelmäßigen Zeitabständen oder bei speziellen Zuständen, wie beispielsweise Alarmzuständen, über den Gerätestatus zu informieren bzw. zu alarmieren.

Weiterhin kann vorgesehen sein, daß im mobilen Endgerät und/oder in der Kontrolleinheit und/oder im Netz eine oder mehrere Applikationen vorgesehen sind. Denkbar sind beispielsweise im mobilen Endgerät implementierte Benutzeroberflächen oder z. B. Softwareprogramme, die zu bestimmten Zeiten und/oder an bestimmte Geräte die gewünschten Daten übermitteln. Dabei ist es möglich, daß der Bediener auf dem mobilen Endgerät einen Button betätigt und sodann das zugehörige Überwachungs-/ Steuerungs-/ und/oder Regelungsprogramm abläuft. Entsprechende "Intelligenz" kann alternativ oder zusätzlich in der Kontrolleinheit oder im Netz abgelegt sein.

Eine derartige Anwendung ist vor allem dann sinnvoll, wenn regelmäßig die gleichen Programmabläufe, z. B. in einer Chemieanlage gewünscht werden.

Es kann beispielsweise vorgesehen sein, dass auf dem mobilen Endgerät ein Browser installiert ist, mittels dessen auf einen Server zugegriffen wird, auf dem eine Applikation abgelegt ist. Der Server kann als Kontrolleinheit dienen. Der Benutzer hat auf diese Weise Zugriff auf eine Benutzeroberfläche, bei deren Betätigung entsprechende Befehle von der Kontrolleinheit an die angeschlossenen Endgeräte übermittelt werden, die überwacht, gesteuert oder geregelt werden sollen. Der Zugriff auf den Server kann beispielsweise mittels Internet erfolgen.

Alternativ besteht die Möglichkeit, die Applikation auf dem mobilen Endgerät vorzusehen oder auf andere oder mehrere Komponenten des Systems zu verteilen.

Denkbar ist beispielsweise eine Lösung, bei der die Applikation vollständig auf dem mobilen Endgerät abgelegt ist und bei Betätigung beispielsweise einer Benutzeroberfläche Steuerungs- oder Regelungssignale an die Endgeräte übertragen werden, die überwacht, gesteuert oder geregelt werden sollen. In diesem Fall ist die Zwischenschaltung des Internet nicht zwingend erforderlich.

In einer Ausführungsform der vorliegenden Erfindung umfasst das Kommunikationssystem eine Kontrolleinheit, die als Embedded PC bzw. WEB-Server ausgeführt ist, auf dem eine oder mehrere die Überwachung, Steuerung und/oder Regelung eines oder mehrerer Geräte betreffende Applikationen abgelegt sind, wobei das mobile Endgerät einen Browser aufweist und wobei unter Verwendung der Applikation bzw. der Applikationen in Verbindung mit Netzelementen eines Telekommunikationsnetzes mittels des Browsers das eine oder die mehreren Geräte steuerbar und/oder regelbar und/oder überwachbar sind.

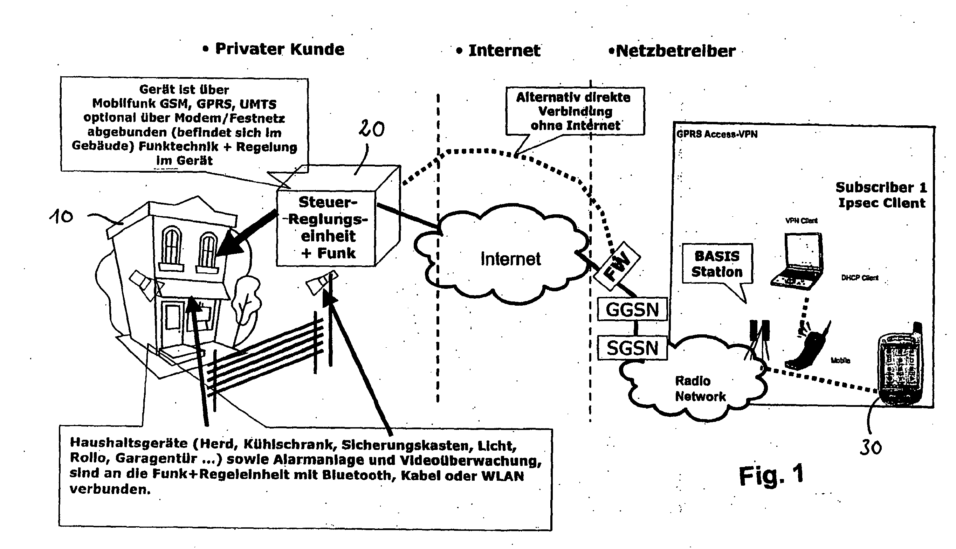

Besonders vorteilhaft ist es, wenn die Steuerung und/oder Regelung und/oder Überwachung über Benutzeroberflächen aufgrund der Applikation oder Applikationen ermöglicht ist. Damit läßt sich ein funktionsfähige Konzept einschließlich eines Embedded PC bzw. WEB-Servers mit der funktionalen Konstellation der Applikationen erzielen, die beispielsweise einem Pocket-PC-Browser bzw. PDA-Browser die komplexe Steuerung/Regelung/Überwachung über komfortable Benutzeroberflächen aufgrund der Applikationen auf dem Embedded PC (WEB-Server) in Verbindung mit den Netzelementen ermöglicht. Derartige Netzelemente ergeben sich beispielsweise aus Fig. 1 und umfassen exemplarisch Elemente wie die Firewall FW, GGSN und SGSN.

Wie aus den Figuren ersichtlich, kann die Anbindung des mobilen Endgerätes an die Kontrolleinheit unter Zuhilfenahme des Internet erfolgen. Darüber hinaus kann eine Applikation mit eigenständiger Benutzeroberfläche auch ohne Browser lediglich auf dem mobilen Endgerät (beispielsweise PDA) und unabhängig vom Internet Steuer- bzw. Regelungsbefehle zum Embedded PC senden. Dieser verarbeitet die Werte und führt entsprechend die Steuerung-/Regelungsbefehle über seine l/O-Schnittstellen aus. Selbstverständlich ist mit einem derartigen System auch die Überwachung möglich. In weiterer Ausgestaltung der vorliegenden Erfindung ist vorgesehen, dass die Kontrolleinheit als WEB-Server ausgeführt ist oder einen WEB-Server enthält, der die Ausführung von Java-Servlets ermöglicht. Dabei kann vorgesehen sein, dass die Java-Servlets derart ausgeführt sind, dass sie sowohl die Bearbeitung von http-Requests von mobilen Endgeräten als auch die Einwirkung auf die Peripherie abwickeln.

Die vorliegende Erfindung betrifft ferner ein Verfahren zur Datenübertragung, insbesondere zur Überwachung, Steuerung und/oder Regelung eines oder mehrerer Geräte, mittels eines in einem Telekommunikationsnetz eines Netzbetreibers betreibbaren mobilen Endgerätes, das die vorliegende Schritte umfaßt:
- Übertragung von Daten, insbesondere von die Überwachung, Steuerung und/oder Regelung des oder der Geräte betreffende Daten, von dem oder den Geräten an eine Kontrolleinheit und/oder von der Kontrolleinheit an das oder die Geräte mittels Verkabelung oder drahtloser Übertragung,
- Übertragung von Daten von der Kontrolleinheit an eine Kommunikationseinheit oder von der Kommunikationseinheit an die Kontrolleinheit, und Übertragung von Daten von der Kommunikationseinheit zu dem Netzbetreiber des Telekommunikationsnetzes oder von dem Netzbetreiber zu der Kommunikationseinheit
- Übertragung von Daten von dem Netzbetreiber an das mobile Endgerät auf der Grundlage der von der Kommunikationseinheit an den Netzbetreiber übertragenen Daten oder Übertragung der Daten von dem mobilen Endgerät an den Netzbetreiber, auf deren Grundlage Daten von dem Netzbetreiber an die Kommunikationseinheit übermittelt werden.

Vorteilhafte Ausgestaltungen des Verfahrens sind Gegenstand der Ansprüche 23 bis 40.

Die Datenübertragung zwischen dem Gerät und der Kontrolleinheit kann mittels Verkabelung, Bluetooth oder WLAN erfolgen.

Die Datenübertragung zwischen Kommunikationseinheit und dem Netzbetreiber kann über das Festnetz oder per Mobilfunknetz, insbesondere nach dem GSM-, GPRS- oder UMTS-Standard, erfolgen. Grundsätzlich ist jede beliebige Übertragungstechnik möglich.

Dabei kann die Datenübertragung zwischen Kommunikationseinheit und dem Netzbetreiber auch mittelbar, insbesondere unter Zwischenschaltung des Internet erfolgen. Anstelle oder zusätzlich zum Internet ist auch die Zwischenschaltung des Festnetzes oder weiterer Mobilfunknetze möglich.

Ferner kann vorgesehen sein, daß mittels eines Mobilfunknetzes, insbesondere mittels eines nach dem GPRS-Standard arbeitenden Mobilfunknetzes, eine Verbindung zwischen der Kommunikationseinheit und dem Internet sowie zwischen dem Internet und dem Netzbetreiber aufgebaut wird.

Alternativ dazu kann vorgesehen sein, daß die Datenübertragung zwischen Kommunikationseinheit und dem Netzbetreiber unmittelbar mittels eines Mobilfunknetzes oder per Festnetz erfolgt.

In weiterer Ausgestaltung der vorliegenden Erfindung ist vorgesehen, daß die Kommunikation zwischen dem Netzbetreiber und dem mobilen Endgerät nach dem GSM-Standard erfolgt.

Die Datenstruktur der zwischen den Komponenten des Systems übertragenen Daten kann in einer oder mehreren Komponenten des Kommunikationssystems verändert werden, wenn dies aus technischen Gründen erforderlich oder vorteilhaft ist. Beispielsweise ist es möglich, daß die von der Kommunikationseinheit oder dem mobilen Endgerät übermittelten Daten im Netz verändert werden oder zur Zuordnung eines zugehörigen Datensatzes benötigt werden, der dann weiterübertragen wird.

In weiterer Ausgestaltung des erfindungsgemäßen Verfahrens ist vorgesehen, dass die Kontrolleinheit als Embedded PC bzw. WEB-Server ausgeführt ist, auf dem eine oder mehrere die Übertragung, Steuerung und/oder Regelung eines oder mehrerer Geräte betreffende Applikationen abgelegt sind, und dass das mobile Endgerät einen Browser aufweist, wobei mittels des Browsers die Steuerung und/oder Regelung und/oder Überwachung der einen oder mehreren Geräte durchgeführt wird, und diese Durchführung durch die Applikation in Verbindung mit Netzelementen eines Telekommunikationsnetzes ermöglicht wird. Dabei kann die Steuerung/Überwachung/Regelung über Benutzeroberflächen aufgrund der Applikationen erfolgen.

Weiterhin kann vorgesehen sein, dass die Kontrolleinheit als WEB-Server ausgeführt ist oder einen WEB-Server enthält, mittels dessen JAVA-Servlets ausgeführt werden. Es kann vorgesehen sein, dass die JAVA-Servlets sowohl die Bearbeitung von http-Requests von mobilen Endgeräten als auch die Einwirkung auf die Peripherie abwickeln.

Weitere Einzelheiten und Vorteile der vorliegenden Erfindung werden anhand eines in der Zeichnung dargestellten Ausführungsbeispiels näher erläutert:

Es zeigen:
- Fig. 1:: die Überwachung, Steuerung bzw. Regelung von Geräten im Haushalt,
- Fig. 2:: die Überwachung, Steuerung bzw. Regelung von Geräten in technischen Anlagen oder sonstigen wichtigen Objekten,
- Fig. 3:: eine weitere schematische Darstellung der Überwachung, Steuerung bzw. Regelung unterschiedlicher Geräte mittels eines mobilen Endgerätes,
- Fig. 4:: eine schematische Darstellung des erfindungsgemäßen Systems in einer mobile zu mobile - Lösung und in einer mobile zu Festnetz-Lösung,
- Fig. 5:: schematische Darstellung des Datenverkehrs zu l/O-Modulen und
- Fig. 6:: schematische Darstellung des Datenverkehrs zu einer WebCam.

Fig. 1 zeigt einen schematischen Ablauf der Überwachung, Steuerung bzw. Regelung von im Haushalt befindlichen Geräten mittels eines mobilen Endgerätes.

In dem Gebäude 10 befinden sich Haushaltsgeräte, wie z.B. ein Herd, Kühlschrank, der Sicherungskasten, Licht, Rollo, Garagentür, Alarmanlage, Videoüberwachungsanlage etc., die überwacht, gesteuert oder geregelt werden sollen. Zu diesem Zweck ist eine Kontroll- und Kommunikationseinheit 20 vorgesehen, die eine bauliche Einheit darstellt und die eine Kontroll- sowie eine Kommunikationseinheit enthält. Die Kontrolleinheit sowie die Kommunikationseinheit sind miteinander zum Zwecke des Datenaustauschs verkabelt.

An die Kontrolleinheit sind die in dem Gebäude 10 befindlichen und oben genannten Geräte mittels Bluetooth, Kabel oder WLAN angeschlossen.

Die Kontrolleinheit dient als Überwachungseinheit, indem sie Daten von den genannten Geräten empfängt. Sie dient ferner als Steuer- und Regeleinheit, da sie Daten an die genannten Geräte übermittelt, wie beispielsweise Temperaturen, Öffnungs- oder Schließzustände etc. sowie als Regeleinheit, die mittels eines Regelalgorithmus die an sie übertragenen Istwerte der Geräte an die gewünschten Sollwerte anpaßt.

In der Kontroll- und Kommunikationseinheit 20 befindet sich ferner eine Kommunikationseinheit, die eine Sende- und oder Empfangseinheit umfaßt, mittels derer Daten per Mobilfunk, insbesondere nach dem GSM-, GPRS- oder UMTS-Standard gesendet und/oder empfangen werden können. Alternativ dazu ist denkbar, daß die Kommunikationseinheit mittels eines Modems an das Festnetz angebunden ist.

Die Datenübertragung von und zu der Kommunikationseinheit erfolgt im vorliegenden Ausführungsbeispiel vorzugsweise über die Mobilfunkstandards GSM, GPRS oder UMTS.

Die Kommunikation mit dem Netzbetreiber kann unmittelbar mit einer dieser Mobilfunkübertragungstechniken oder per Festnetz erfolgen. Alternativ dazu ist denkbar, daß die Kontroll- und Kommunikationseinheit 20 mit dem Internet in Verbindung steht und zwar ebenfalls vorzugsweise mittels Mobilfunk, beispielsweise WAP oder GPRS. Entsprechend der genannten Ausstattung der Sende- und Empfangseinheit der Kommunikationseinheit mit einem Modem kann die Verbindung mit dem Internet auch per Festnetz erfolgen.

Die Datenübertragung bzw. Datenempfang seitens des Netzbetreibers erfolgt mittels Firewall FW und eines SGSN/GGSN-Systems, das das GPRS-System an das Internet bzw. an ein anderes Mobilfunknetz oder an das Festnetz anschließt. In bevorzugter Ausgestaltung erfolgt die Anbindung zum Internet gemäß dem vorliegenden Ausführungsbeispiel per Mobilfunktechnik. Erfolgt die Übermittlung seitens der Kontroll- und Kommunikationseinheit 20 jedoch unmittelbar ohne Zwischenschaltung des Internets ist naturgemäß eine Anbindung des Netzbetreibers an das Internet nicht erforderlich.

Mittels des Systems SGSN wird das GPRS-System an ein GSM-System angeschlossen. Das SGSN-System wickelt den Datentransfer von und zu den Mobilfunkstationen ab. Die Datenübertragung erfolgt nun mittels des Mobilfunknetzes eines Netzbetreibers an die Basisstation und von dort aus mittels der üblichen Übertragungstechniken an das mobile Endgerät 30.

Das Netz, mittels dessen Daten von der Kommunikationseinheit an einen Netzbetreiber übermittelt werden, muß nicht dem Netz entsprechen, das zur Übertragung von Daten an das mobile Endgerät dient. Hierbei können Netze unterschiedlicher Netzbetreiber zum Einsatz kommen. Denkbar ist, daß der Netzbetreiber des Festnetzes nicht dem Betreiber des Mobilfunknetzes entspricht, das den Datentransfer von und zu dem mobilen Endgerät abwickelt.

Über die in Fig. 1 dargestellte Vorrichtung kann der Benutzer des mobilen Endgerätes 30 über die Betriebszustände der für ihn wichtigen Geräte informiert werden oder seinerseits steuernd oder regelnd auf diese Geräte Einfluß nehmen. Er gibt dazu die entsprechenden Befehle, wie beispielsweise An-/Auszustände oder Temperaturen etc. in das mobile Endgerät ein und schickt diese Information ab. Sie wird über das Telekommunikationsnetz eines Netzbetreibers entweder mit Hilfe des Internet oder unmittelbar an die Kontroll- und Kommunikationseinheit 20 übertragen und von dort aus an die Geräte in Gebäude 10 weitergegeben bzw. dient als Sollwert, der zur Regelung der Geräte benötigt wird.

Der Bediener gibt hierzu die Anwahlnummer der Kontroll- und Kommunikationseinheit 20, die dem Gebäude 10 zugeordnet ist, in sein Handy ein oder betätigt das entsprechende Symbol auf dem Display. Die Kontroll- und Kommunikationseinheit 20 ist im Netz des Telekommunikationsbetreibers eindeutig identifizierbar und kann daher mittels Internet oder der genannten unmittelbaren Mobilfunk- oder Festnetzverbindung angesteuert werden. Die Kontroll- und Kommunikationseinheit übernimmt die gewünschte Adressierung des Gerätes.

Gemäß dem vorliegenden Ausführungsbeispiel sind dazu keine besonderen Anpassungen oder Veränderungen des Telekommunikationsnetzes erforderlich, da die Kontroll- und Kommunikationseinheit 20 im Netz arbeitet und identifiziert wird wie mobile Endgeräte bzw. Festnetzgeräte.

Fig. 1 zeigt femer eine mögliche Datenübertragung von bzw. zu einem Laptop, mittels dessen die an das Mobilfunkgerät übertragenen Daten angezeigt werden können bzw. mittels dessen Daten eingegeben werden können, die sodann mittels des Mobilfunkgerätes übertragen werden. Die Datenübertragung kann beispielsweise per Infrarot erfolgen.

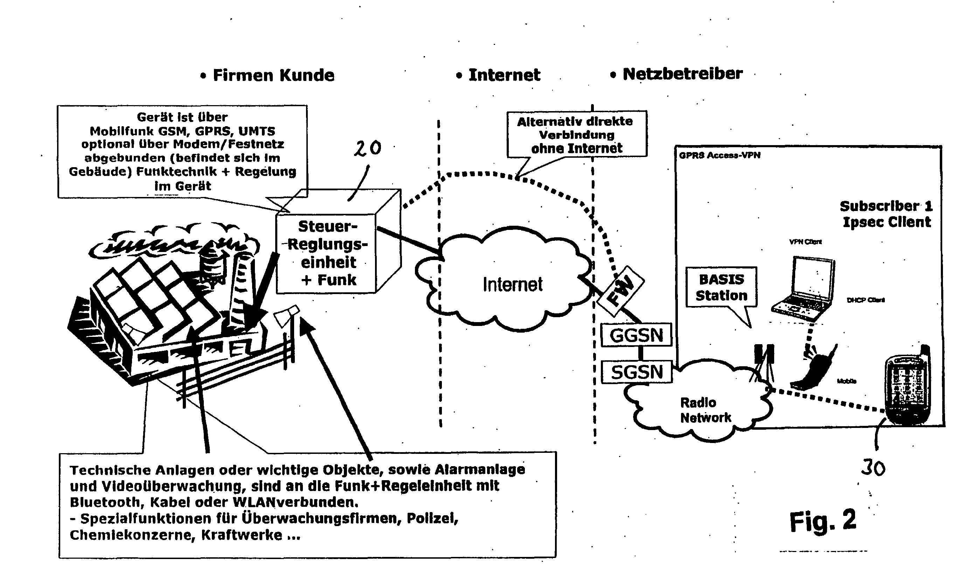

Fig. 2 zeigt eine Vorrichtung zur Überwachung technischer Anlagen oder anderer wichtiger Objekte, wie Alarmanlagen, Videoüberwachungsanlagen. Der Datenfluß entspricht dem in Fig. 1 erläutertem.

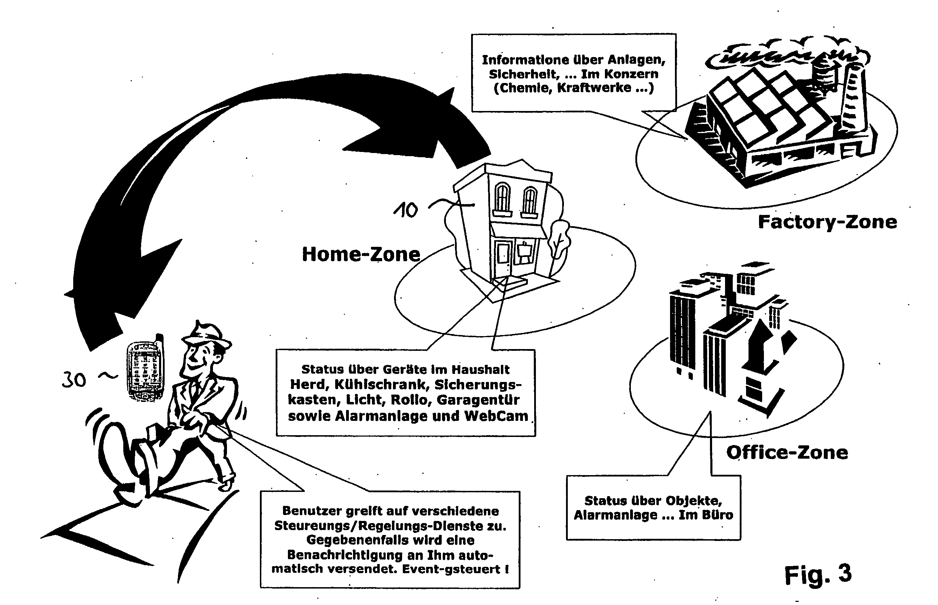

Fig. 3 zeigt in einer Übersicht die Möglichkeiten des erfindungsgemäßen Verfahrens bzw. der erfindungsgemäßen Vorrichtung zur Überwachung von Gebäuden (Homezone) von Fabrikanlagen, Kraftwerken etc. (Factory Zone) oder von Objekten, wie beispielsweise Alarmanlagen, in Büros (Office-Zone).

Es können ferner in Fig. 1 bis 3 nicht dargestellte Mittel vorgesehen sein, die bewirken, daß der Bediener des mobilen Endgerätes 30 in Zeitabständen oder in besonderen Zuständen der Geräte, beispielsweise Alarmzuständen, automatisch über den aktuellen Status der entsprechenden Geräte informiert wird. Dies kann beispielsweise in Form einer SMS oder mittels einer Sprachmeldung erfolgen.

Mit der vorliegenden Erfindung sind aktive und passive Regelung/Steuerung Geräte über Mobilfunk (-GSM, GPRS, UMTS) möglich. Der Benutzer besitzt ein mobiles Endgerät, das Informationen aus einem Haushalt oder einer Firma erhält, wobei er darauf aktiv mit Befehlen über die Tastatur oder Benutzeroberfläche reagieren kann. Ein weiteres Eingreifen seitens des Bedieners oder die Zwischenschaltung vom Bediener vorzunehmender Schritte ist nicht zwingend erforderlich.

Es ist eine eigene Abfrage oder Beobachtung des Haushalts oder der Firma möglich. Der Benutzer kann je nach Ausgestaltung der vorliegenden Erfindung aktiv steuern bzw. regeln.

Zu der komplett Mobilfunk basierten Lösung besteht die Möglichkeit, Haushalt oder Firma an das Festnetz zu koppeln. Auch in diesem Fall erhält das mobile Endgerät die benötigten Informationen bzw. können mittels des mobilen Endgerätes die benötigten Informationen übersandt werden.

Die Geräte im Haushalt oder der Firma sind beispielsweise per Draht, Bluetooth oder WLAN miteinander verbunden. Die Kontroll- und Kommunikationseinheit (Box) stellt die technische Verbindungskomponente für die Telefon- und Steuerungs/Regelungs-Welt dar.

Einsatzmöglichkeiten der vorliegenden Erfindung sind beispielsweise Chemiekonzerne, Überwachungsdienste, Polizei, großflächige Konzerne und Kraftwerke. Auch im Bereich Haus und Freizeit (Alarmanlagen, Home-Webcam...) sind Anwendungen denkbar.

Vorteilhaft sind insbesondere "intelligente" Kontrolleinheiten, Netzwerkkomponenten und/oder "intelligente" mobile Endgeräte einsetzbar, die Applikationen enthalten. Denkbar ist, daß darin Programmabläufe, beispielsweise der Ablauf von Temperaturrampen, abgelegt sind, die durch entsprechende Betätigung des mobilen Endgerätes aktivierbar sind.

Der zu Grunde liegende Gedanke der Erfindung ist es, eine Steuerung/Regelung oder Überwachung über weite Entfernungen vom zu steuernden/regelnden bzw. zu überwachenden Gerät über Funkstrecken, hier insbesondere Mobilfunk, anzubieten. Hierbei ist darauf hinzuweisen, dass je nach Ausführungsform der Erfindung unter üblichen Umständen eine Funktion dieses Konzepts weniger vorteilhaft bzw. schwierig oder nicht möglich ist. Besonders vorteilhaft ist der Einsatz speziell entwickelter Applikationen auf dem mobilen Gerät und/oder in einer Kontrolleinheit und/oder in sonstigen Elementen des Systems. In einer dafür geeigneten Umgebung der Netzelemente, und einer für dieses Konzept ausgelegten Steuerungs/Regelungs/Überwachungs-Einheit ist dieses Konzept funktionsfähig. Wesentlich ist das Zusammenspiel der Komponenten/Applikationen im Bezug auf spezielle Lösungen, die eine Funktion ermöglichen.

Die Erfindung wird im Folgenden anhand eines weiteren Ausführungsbeispiels erläutert:

Im folgenden soll die Erfindung die aufgeführten Anforderungen erfüllen. Darüber hinaus ist der Applikationsteil nochmals separat dargestellt. Das Konzept ermöglicht aktive und/oder passive Regelung/Steuerung bzw. Überwachung externer Geräte über Mobilfunk (-GSM, GPRS, UMTS). Der Benutzer besitzt ein Mobile-Gerät, das Informationen beispielsweise aus einem Haushalt oder einer Firma erhält, und darauf aktiv mit Befehlen über Tastatur und/oder Benutzeroberfläche reagieren kann.

Eine eigene Abfrage oder Beobachtung des Haushalts oder Firma ist möglich. Der Benutzer kann beispielsweise aktiv Steuern und Regeln.

Zu der komplett mobilfunkbasierten Lösung besteht die Möglichkeit, Haushalt, Firma etc. an das Festnetz zu koppeln. Das Endgerät bleibt weiterhin mobil. Die Geräte am Standort der Kontrolleinheit bzw. Steuerungs/Regelungseinheit sind entweder mit Draht, Bluetooth, oder WLAN miteinander verbunden. Eine Steuer/Regeleinheit (Box) stellt die technische Verbindungskomponente für die Telefon- und Steuerungs-/Regelungswelt dar.

Besonders vorteilhaft ist das Vorhandensein einer Applikation mit einer entsprechenden Benutzeroberfläche, bei der der Benutzer komfortabel mit Schaltflächen, sowie diversen Conrol Pannel, bestimmte Funktionen auslösen kann, bzw. Vorgaben für die Steuerung/Regelungseinheit einstellen kann. Möglich wären hier zum Beispiel Vorgaben einer Raumtemperatur mit einem auf der Benutzeroberfläche eingefügten Schieberegler, wobei die genauen Temperaturwerte in einer separaten Anzeige dargestellt wären, der Benutzer aber, ähnlich wie bei einer Automobil Klimaanlage, bis zu einem gewünschten Wert den Regler verschiebt. Darüber hinaus sind aber auch die üblichen Schaltflächen für Ein-/Aus- Funktionen sowie andere Einstellungen für entsprechende Anwendungen aufzeigbar. Die Applikation selber übernimmt komplexe Aufgaben, wie beispielsweise Berechnungen von Steuerungs-/Regelungsverhalten (Rampenfunktion, etc.) in bestimmten Anwendungsgebieten, bzw. Austausch der Information über das Mobilfunknetz an die Kontrolleinheit, in der betreffenden Räumlichkeit, die ebenfalls über eine entsprechende Applikation verfügen kann. Durch Software Updates ist eine Anpassung an eventuelle Veränderungen in der gesteuerten/geregelten Umgebung machbar. Dieses Konzept ermöglicht eine komfortable Handhabung per spezieller Benutzeroberfläche, und mit einer entsprechenden geeigneten Übertragungsbandbreite und der dafür geeigneten Datenübermittlung (Datenstrom, beispielsweise über das Internet Protokoll) die Überwachung/Steuerung/Regelung von Geräten etc. Dies ist bei reinen GSM Netzen ohne weiteres nicht möglich.

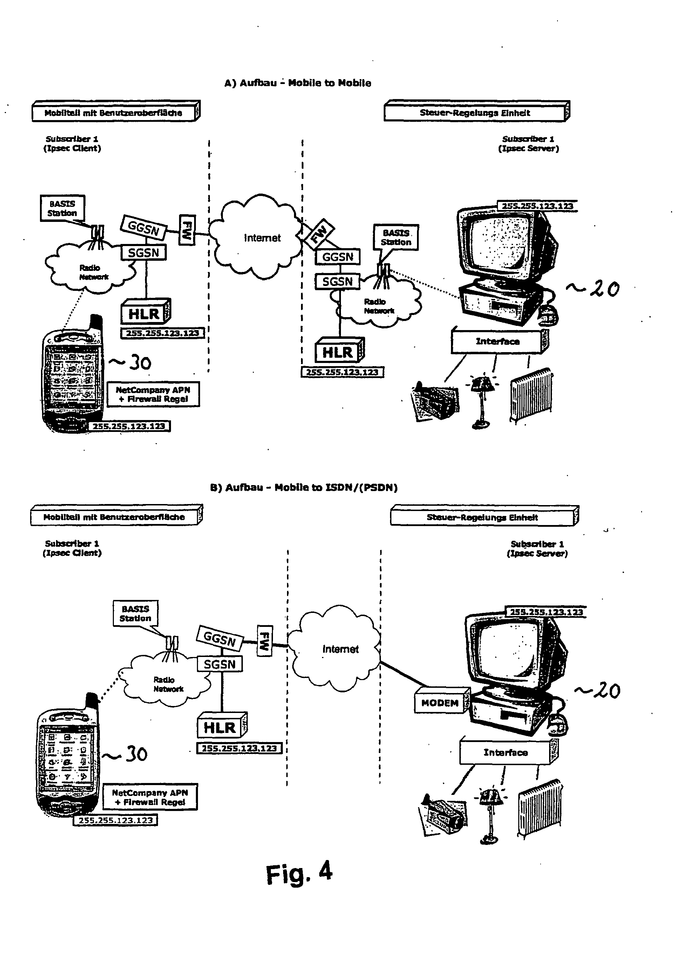

Um den komplexen steuerungs-/regelungstechnischen Anforderungen des vorliegenden Ausführungsbeispiels gerecht zu werden, reicht ein einfaches Display mit einer Tastatur nicht aus. Vielmehr setzt dieses Ausführungsbeispiel als Applikationsträger auf der Benutzer (Client) - seite Geräte mit erheblich höheren Anforderungen voraus. Hierbei kommen unter anderem, wie in Fig. 4 dargestellt, PDAs (Personal Digital Assistant) 30 mit Mobilfunkeinheit, sowie tragbare Computer wie beispielsweise Notebooks, mit ebenfalls einer Anbindung an den Mobilfunk über ein normales Mobiltelefon, oder eine entsprechende Mobilfunkkarte zum Einstecken, infrage. Auf der Seite der Kontrolleinheit ist eine entsprechende komplexe Applikation für die Bewerkstelligung steuerungs- und reglungstechnischer Vorgänge in Richtung der steuernden/regelnden Geräte vorgesehen (Heizung, Lichtschalter, etc.). Um den Nutzen einer Applikation hervorzuheben ist gemäß Fig. 4 insbesondere zum einen ein PDA (Personal Digital Assistant) mit Mobilfunkeinheit, zum anderen ein Notebook oder andere tragbare Geräte mit Mobilfunk und Computereinheit nutzbar.

In der vorliegenden Darstellung sind insbesondere hohe Datenströme aufgrund der verwendeten Datenübertragungstechniken zu bewerkstelligen, die im Verbund mit intelligenten Applikationen auf der Clientseite, und bei der Kontrolleinheit 20 mit ebenfalls einer komplexen Applikation auf der Serverseite ein schlüssiges Konzept präsentieren. Darüber hinaus kann das Verfahren mit Sicherheitskriterien wie Firewall und Virtual Privat Network, wie in den Figuren ersichtlich, optional aufgerüstet werden. Die Kontrolleinheit 30 steht über das Interface mit den zu überwachenden / zu steuernden / zu regelnden Geräten in Verbindung.

Zu erwähnen ist, dass die Netzelemente in dem vorliegenden Verfahren relevant sind, da sie einen Teil des gesamten Verfahrens beschreiben. Siehe hierzu die SGSN, GGSN, Firewall (FW), sowie zusätzliche Sicherheitssysteme, wie VPN (Virtuall Privat Network) oder IPSec (Internet Protokoll Security), etc., ohne diese zwar eine Funktion gegeben ist, jedoch erst damit eine sichere Handhabung, ohne fremdes Abhören möglich wird. Als weiteres Protokoll käme auch das PPTP als MS VPN Standardprotokoll sowie L2TP infrage .Das Verfahren kann auch ohne die erwähnten Sicherheitskomponenten wie VPN etc. benutzt werden.

Ein Merkmal kann bei der Benutzung der Microsoft Pocket PC, welches meistens auf PDAs benutzt wird, angewendet werden. Hierbei kann eine spezielle Applikation auf einem Embedded PC bzw. WEB_Server abgelegt werden,die die Üblichen Problematiken, die bei dem speziellen "Pocket InternetExplorer" vorzufinden sind, umgeht. Das Problem schildert sich durch Inkompatibilitäten zu den üblichen Windows Browsern auf PC Systemen. Hierbeigibt es eine Reihe von Schwierigkeiten, insbesondere die Nutzung vonspeziellen Frames und der Applets, die ohne weiteres mit dem "Pocket InternetExplorer" nicht funktionieren. Im einzelnen wurden Applikationen auf dem Ebedded PC, bzw. EB Server programmiert, die dieses Problem mit HTML Code,CGl Scripts, Java Script Code, sowie speziellen Servlets lösen. Diese sind weiter unten technisch erläutert. Darüber hinaus kann eine dedizierte Applikation, mit eigenständiger Benutzeroberfläche, auch ohne Browser, lediglich auf dem Client (bsp. PDA mit Mobilfunkeinheit) und unabhängig vom Internet Steuerbefehle zum Embedded PC zusenden. Dieser Verarbeitet die Werte und führt entsprechend die Steuerungs/Regelungs - Befehle über Seine l/O Schnittstellen aus.

Im Folgenden werden einige Details zum technischen Konzept einer möglichen Ausführungsform der Erfindung näher erläutert

### Besonderheiten des Clients (hier PDA mit Mobilfunk-Komponente)

Grundsätzlich ist das System über GPRS-/-Internet von einem beliebigen Client aus bedienbar, d.h. PDA, Laptop mit GPRS-Karte etc.. Es wurde jedoch auf den PDA mit Mobilfunkeinheit als Bedienungs-Client fokussiert. Seine Besonderheiten prägen die Implementierung. Der PDA vereint die Funktionalität eines leistungsfähigen Mini-PC (PDA) mit Telefonie und drahtlosen Datenverbindungen (via GSM, GPRS, ggf. WLAN). Er ist mit dem Standard-Betriebssystem "Pocket PC 2002" (= Windows CE 3.0, oder neuer) von Microsoft ausgestattet, in das ein eigener Internet-Browser, der "Pocket Internet Explorer" (PIE) integriert ist. Dieser bringt einige Besonderheiten mit sich, die bei einer Implementierung zu berücksichtigen sind. Ein Beispiel soll die Lösung bei einer Nutzung einer Kamera veranschaulichen. Diese ist auf entsprechend andere Anwendungsgebiete der Steuerung/Regelung über Mobilfunk ausdehnbar.

Zum PIE gehört, daß keine Java-Applets ausgeführt werden können, der Sprachumfang des verfügbaren Java Scripts (3.0) stellt eine Teilmenge des üblichen (5.ff) dar, das Document-Object-Model ist ebenfalls teilweise eingeschränkt. Es existieren andere Browser für PPC02, die z.B. Applets ausführen können (NetFront). Hier ergeben sich jedoch gravierende Schwierigkeiten im Zusammenspiel beispielsweise mit einer Kamera. Die Implementierung ist daher intern von der Kunst des Möglichen geprägt, gewünschte Funktionalität auf einem nicht immer direkten Wege zu erreichen. Die Hürden seien hier aufgeführt, darauffolgend eine Lösung. Die aufgeführten Software Module sind komplett selbst entwickelt (TakeControl.exe, Wrapper.exe ...), bzw. speziell an die Anforderungen angeglichen.

### Fehlermeldung bei void-CGls

Wird ein CGI aufgerufen, das keine HTML-Seite zurückschickt, etwa für Steuerbefehle an die Kamera, dann beläßt ein PC-Browser üblicherweise die aktuelle Seite unverändert. Der PIE poppt allerdings eine Fehlermeldung "Die gesuchte Seite kann nicht gefunden werden." mit Piepton auf den Schirm. Sie muß mit "OK" quittiert werden. Der Steuerbefehl wird zwar abgeschickt und ausgeführt, die ständige eigentlich irrelevante Fehlermeldung wäre jedoch auf Dauer störend und daher inakzeptabel.

### Kein Img.src

Um eine CGI-Ansteuerung für den PIE nicht als fehlerhaften Seitenrequest wirken zu lassen, könnte das Ergebnis als Teil einer Seite versteckt werden, etwa als IMG-SRC. Dieses Attribut des IMG-Objektes steht jedoch im PIE-DOM nicht zur Verfügung. Angesteuert wird stattdessen ein Sub-FRAME über LOCATION.HREF.

### HTML-Wrapping

Wird ein Sub-FRAME mit einem Steuerungs-CGI angesteuert, dann quittiert der PIE dies ebenfalls mit der beschriebenen Fehlermeldung. Daher wird stattdessen eine Wrapper-Html-Seite in einen Dummy-FRAME geladen, die im wesentlichen eine oder mehrere CGI-Ansteuerungen enthält. Diese sind dadurch allerdings statisch und können nicht dynamisch vom Client über Programm-Funktionen (Java-Scipt) variiert werden. Bsp.: "Setze Zoom-Schrittweite auf 40, zoome einen (40er-) Schritt auf das Motiv zu" kann nicht zu einem 20er-Schritt variiert werden.

### "Enforced Caching" blockiert Steuerbefehle

Das Zwischenspeicher Cache-Verhalten des PIE ist auf Einsparen von Übertragung ausgerichtet und kann nur bedingt und indirekt beeinflusst werden.

### Aktualisierung

Eine erneute Anforderung des Kamerabildes wird vom PIE grundsätzlich unterdrückt, weil der PIE glaubt, dass das Bild ja schließlich bereits übertragen ist. Wird die URL des Bildes jedoch um Dummy-Parameter angereichert, so erkennt die Kamera, dass es sich um das gleiche, jeweils zu aktualisierende Bild handelt, der PIE erkennt aber auf eine von der letzten unterschiedliche also nicht zwingend gemachte Anforderung und gibt diese weiter, worauf er von der Kamera ein aktualisiertes Bild erhält.

Es genügt das Schalten zwischen zwei Varianten, da sich das unbedingte Zwischenspeichern (cache) des PIE nur auf Elemente der aktuell angezeigten Seite bezieht. Dieses Hin- und Herschalten (toggle) wird über vom PIE auszuführenden JavaScript-Code realisiert.

### Steuerung/Regelung

Die CGI-Steuerbefehle werden ebenfalls grundsätzlich nicht zweimal nacheinander abgeschickt (Bsp.: statt Kamera bewegen links-links müsste der Benutzer linksoben-links-unten wählen). Dies gilt auch für die Umhüllung in einer Wrapper-Html. Wird diese jedoch über Java Script in einen (Dummy-) Frame geladen, dann wird der Befehl vom PIE stets wie gewollt ausgeführt (übertragen).

### integration Steuerung/Fernwirktechnik und Überwachungs-Kamera

Ein Wechsel zwischen Teilfunktionen (Steuerung, Überwachungs-Bild, Kamera-Bewegung) auf einzelnen Seiten würde jeweils längere Ladezeiten bedingen. Die Integration aller Teilfunktionen in eine übergroße Seite, über die nur mit je einem äußeren vertikalen und horizontalem Scrollbalken der Fokus der PDA-Anzeige bewegt wird (Scrollen statt Seitenwechsel) ist nur mit Frames (Teilfenster-Rahmen) möglich. Der Browser (PIE wie PC-IE) zeigt dann jedoch anfänglich alle Frames innerhalb der sichtbaren Anzeige an. Dabei ist jeder Frame mit eigenen Scrollbalken versehen, es kann jedoch kein Frame aus der Anzeige verschoben werden. Das Ausgangsbild ist daher so entworfen, dass alle wichtigen Funktionen in verschiedenen Frames gemeinsam präsentiert werden. Durch Verschieben der Grenzen der einzelnen Frames oder über die Funktion "Gehe zu Frame" des PIE-Kontextmenüs kann jedoch ggf. der Fokus auf eine Teilfunktion gesetzt werden.

### Steuerungs-Teil

Auf dem Steuerungs/Regelungs-Computer (SPC) 20 läuft ein Webserver, der die Ausführung von Java-Servlets ermöglicht. Ein Java-Servlet handelt sowohl die Bearbeitung von http-Requests von Clients als auch die Einwirkung auf die Peripherie ab. Dazu werden Funktionen der eingebauten Karten aus Hardwarespezifischen DLLs über Wrapper-Exes angestoßen bzw. ausgewertet.

Das Servlet sendet auf Anforderung eines Clients, etwa des PDA-PIEs eine dynamisch generierte HTML-Seite, die im wesentlichen eine FORM darstellt, Steuerbefehle über Aktivieren oder Deaktivieren von FORM-CheckBoxes werden vom Benutzer über den Button "Setzen" abgeschickt und vom Server über "POST" empfangen und ausgewertet. Dazu werden die Anforderungen gedeutet und an ein Wrapper-Exe (beispielsweise in C++ programmiert) übergeben, sowie erneut eine FORM an den Client geschickt.

Über den Button "Auslesen" kann auch ein bloßes Auslesen des aktuellen Zustand der Steuerung erfolgen, dazu wird ein sep. Wrapper-Exe angestoßen und eine entspr. HTML-FORM generiert und an den Browser-Client geschickt.

### Kamera-Bild und -Steuerung

Das Kamerabild wird übertragen, bei aktuell möglichen GPRS-Übertragungsraten dauert die Bild-Übertragung eventuell einige Sekunden. Eine erneute Übertragung kann über die Funktion "Frame aktualisieren" des Kontextmenüs angefordert werden. Wird die Kamera bewegt, so wird nachfolgend automatisch das Bild erneuert (vom Client angefordert, JScript).
Die Kamera kann durch Klicken auf einige Nummern-Knöpfe [T1] auf eine vordefinierte Stellung (horiz. + vert. Achse, Zoom) gebracht werden. Diese Voreinstellungen sind über eine sep. Oberfläche am Aufbau vorzunehmen (JScript/CGl). Über ein PullDown-Menü [T2] können darüberhinaus vordefinierte einzelne Kamera-Bewegungen angestoßen werden.

### T1:

Die Nummern-Buttons sind als IMGs in einer TABLE angeordnet und mit einer A HREF versehen, die als TARGET einen sep. unsichtbaren Dummy-FRAME mit der Wrapper-HTML-Seite ansteuert, die den CGI-Kamera-Aufruf enthält. Zusätzlich wird über on dick ein verzögerter erneuter Bildaufbau im Nachbar-Frame angestoßen (TIMER) und ein Aufruf des Wrappers bei erneutem Betätigen des selben Positions-Knopfes (z.B. im Falle konkurrierenden Zugriffs) trotz der PIE-Zwischenspeicherung (cache) erzwungen.

### T2:

Das Pulldown-Menü ist als FORM mit SELECT-Einträgen realisiert und mit den Nummern-Buttons in eine "äußere" "TABLE" eingebunden, um das Button-Kreuz mittig zum Pulldown anzuzeigen. Die Auswertung einer Auswahl geschieht über eine ONCHANGE-Funktion. Dort werden wiederum Wrapper-HTMLs in einen dummy-FRAME geladen und ein vezögerter Bild-Refresh getriggert (URL-Toggle). Die Funktion dazu wird aus dem übergeordneten "FRAME" von Kamerabild und der Kamera-Bewegungs-Steuerung ausgeführt.

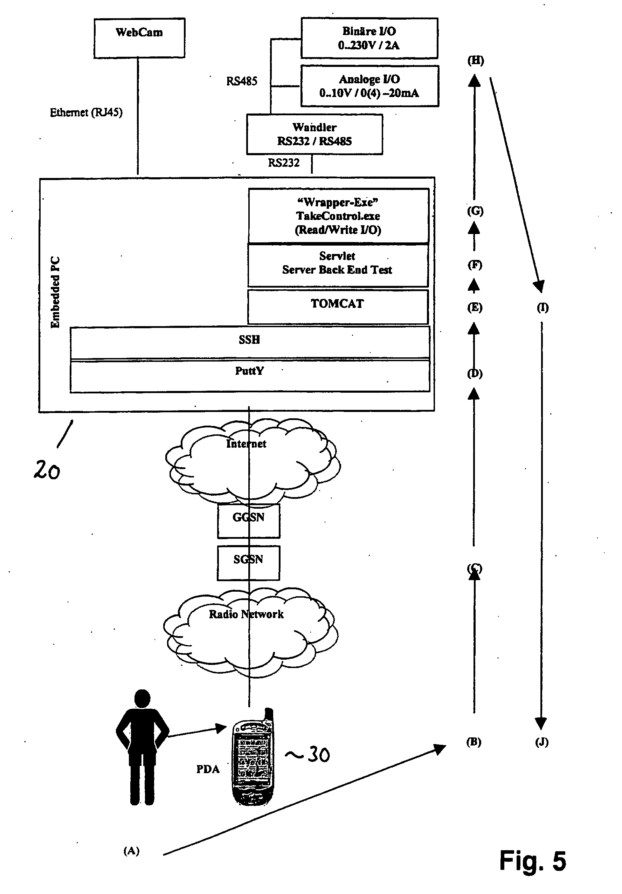

Fig. 5 zeigt den Datenverkehr vom/zum PDA 30 von/zu den l/O-Modulen. Die Kontroll- und Kommunikationseinheit 20 wird durch den Embedded PC gebildet. Die in dieser Zeichnung dargestellten Buchstaben haben die folgende Bedeutung:
A Benutzer betätigt "Setzen" Taste
B PDA überträgt alles Sollwerte (POST) aus der Maske
C Über 02 - APN, Internet werden die Sollwerte an den Embedded - PC gesendet
D PuttY empfängt die Daten (Post 4040) und leiter diese an TOMCAT weiter
E TOMCAT führt das zugehörige Java-Servlet aus
F Das Java-Servlet startet die Wrapper-Exe (TakeControl.exe)
G Wrapper-Exe (TakeControl.exe) kommuniziert über RS232 / RS485 mit den l/O Modulen
H Das Servlet erfragt über die Take Control.exe die aktuellen Zustände der I/O's
Servlet baut eine neue Maske auf und schickt diese über TOMCAT ins Internet
J PDA empfängt die neue Maske und zeigt dem Benutzer die aktuellen Zustände an

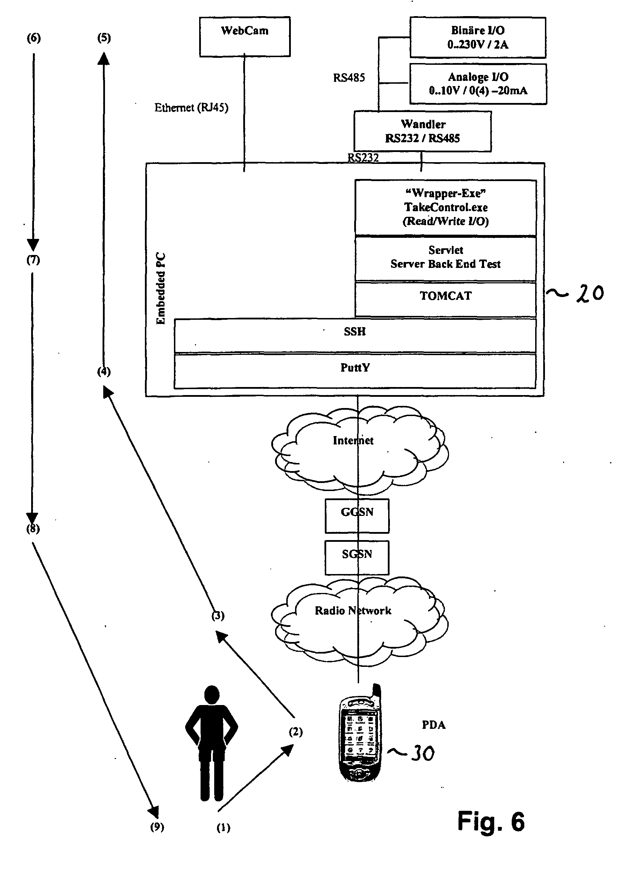

Fig. 6 zeigt den Datenverkehr vom/zum PDA 30 von/zu einer WebCam. Die Kontroll- und Kommunikationseinheit 20 wird durch den Embedded PC gebildet. Die in dieser Figur verwendeten Ziffern bedeuten:
1 Benutzer betätigt z.B. "CamPosition5" Taste
2 PDA führt Java-Script aus ("on dick", More CGI, PIC)
3 PDA request an Internet
4 PuttY empfängt die Daten (Port 3257) und leitet diese zur WebCam weiter
5 WebCam empfängt die Daten und führt CGI aus - WebCam bewegt sich auf Pos.5
6 WebCam sendet aktuelles Bild
7 Neues Bild wird durch den Embedded - PC ins Internet geleitet
8 Bild wird über Internet ins O₂ Funknetzwerk übertragen
9 PDA zeigt neues Bild an

In bevorzugter Ausgestaltung der vorliegenden Erfindung ergeben sich gegenüber üblichen Anwendungen folgende Änderungen:
- verstecktes Ansprechen von CGls über Html-Wrapper in dummy-Frames, was so nicht bei üblichen Browsern nötig wäre.
- Wechselwirkungen zwischen Frames über parent.subframe-Hierarchien (z. B. Bild-Aktualisierung nach Kamerabewegung oder Steuerungsbefehl), was so nicht möglich wäre bei üblichen Browsern.
- Dummy-Appendicies für HTTP-GET-Seiten, um unerwünschtes Caching zu unterdrücken, was so nicht nötig wäre bei üblichen Browsern.

## Patentansprüche

1. Kommunikationssystem zur Datenübertragung von und/oder zu einem oder mehreren Geräten, insbesondere zur Überwachung, Steuerung und/oder Regelung eines oder mehrerer Geräte, wobei das Kommunikationssystem die folgenden Komponenten umfaßt:
wenigstens eine Kontrolleinheit die mit dem oder den Geräten verkabelt ist oder drahtlos in Verbindung steht, wobei die Verbindung derart ausgeführt ist, daß von der Kontrolleinheit zu dem oder den Geräten und/oder von dem oder den Geräten zu der Kontrolleinheit Daten übertragbar sind,
wenigstens eine Kommunikationseinheit, die mit der Kontrolleinheit derart in Verbindung steht, daß Daten zwischen beiden Einheiten übertragbar sind, und mittels derer Daten an einen Netzbetreiber eines Telekommunikationsnetzes übertragbar und/oder von dem Netzbetreiber übertragene Daten empfangbar sind,
wenigstens ein in dem Telekommunikationsnetz des Netzbetreibers betreibbares mobiles Endgerät,
sowie Mittel, durch die auf der Grundlage der von der Kommunikationseinheit an den Netzbetreiber übertragenen Daten Daten von dem Netzbetreiber an das mobile Endgerät und/oder durch die Daten von dem mobilen Endgerät an den Netzbetreiber übermittelbar sind, auf deren Grundlage Daten an die Kommunikationseinheit übertragen werden.

2. Kommunikationssystem nach Anspruch 1, **dadurch gekennzeichnet, daß** die Datenübertragung zwischen den Komponenten des Systems unmittelbar oder mittelbar durch Zwischenschaltung weiterer Komponenten und/oder weiterer Netzbetreiber erfolgt.

3. Kommunikationssystem nach Anspruch 1 oder 2, **dadurch gekennzeichnet, daß** die Verbindung zwischen der Kontrolleinheit und dem oder den Geräten mittels Verkabelung, Bluetooth oder WLAN erfolgt.

4. Kommunikationssystem nach einem der Ansprüche 1 bis 3, **dadurch gekennzeichnet, daß** die Kontrolleinheit als Überwachungseinheit ausgeführt ist, die den Gerätestatus charakterisierende Daten von dem oder den Geräten empfängt.

5. Kommunikationssystem nach einem der Ansprüche 1 bis 4, **dadurch gekennzeichnet, daß** die Kontrolleinheit als Steuereinheit ausgeführt ist, die Daten zum Zwecke der Steuerung an das oder die Geräte überträgt, oder daß die Kontrolleinheit als Regeleinheit ausgeführt ist, die Istwerte von dem oder den Geräten empfängt und mit Sollwerten vergleicht und bei Abweichung die Regelabweichung verringernde Daten an das oder die Geräte übermittelt.

6. Kommunikationssystem nach einem der Ansprüche 1 bis 5, **dadurch gekennzeichnet, daß** die Kontrolleinheit und die Kommunikationseinheit eine bauliche Einheit bilden.

7. Kommunikationssystem nach einem der Ansprüche 1 bis 6, **dadurch gekennzeichnet, daß** die Kontrolleinheit und/oder die Kommunikationseinheit in einem der Geräte integriert ist.

8. Kommunikationssystem nach einem der Ansprüche 1 bis 7, **dadurch gekennzeichnet, daß** die Kommunikationseinheit eine Sende- und/oder Empfangseinheit aufweist, mittels derer die Daten über das Festnetz oder über ein Mobilfunknetz gesendet und/oder empfangen werden können.

9. Kommunikationssystem nach Anspruch 8, **dadurch gekennzeichnet, daß** die Sende- und/oder Empfangseinheit ein Modem ist.

10. Kommunikationssystem nach Anspruch 8, **dadurch gekennzeichnet, daß** die Sende- und/oder Empfangseinheit derart ausgeführt ist, daß sie Daten über ein Mobilfunknetz sendet und/oder empfängt, wobei das Mobilfunknetz nach dem GSM-, GPRS- oder UMTS-Standard arbeitet.

11. Kommunikationssystem nach einem der Ansprüche 8 bis 10, **dadurch gekennzeichnet, daß** die Sende- und/oder Empfangseinheit derart ausgeführt ist, daß eine Verbindung zwischen der Kommunikationseinheit und dem Netzbetreiber unmittelbar mittels des Mobilfunknetzes oder per Festnetz oder mittelbar unter Zwischenschaltung des Internet herstellbar ist.

12. Kommunikationssystem nach einem der Ansprüche 1 bis 11, **dadurch gekennzeichnet, daß** eine Sende- und/oder Empfangseinheit vorgesehen ist, mittels derer der Netzbetreiber die Daten per Festnetz oder per Mobilfunknetz von der Kommunikationseinheit empfängt und/oder an diese überträgt.

13. Kommunikationssystem nach Anspruch 12, **dadurch gekennzeichnet, daß** die Sende- und/oder Empfangseinheit des Netzbetreibers Mittel zum Anschluß eines GPRS-Systems an das Internet oder ein Festnetz oder Mobilfunknetz aufweist.

14. Kommunikationssystem nach Anspruch 12 oder 13, **dadurch gekennzeichnet, daß** Mittel zum Anschluß eines GPRS-Systems an ein GSM-System vorgesehen sind.

15. Kommunikationssystem nach einem der Ansprüche 1 bis 14, **dadurch gekennzeichnet, daß** das mobile Endgerät nach dem GSM-Standard arbeitet.

16. Kommunikationssystem nach einem der Ansprüche 1 bis 15, **dadurch gekennzeichnet, daß** Mittel vorgesehen sind, mittels derer in Zeitabständen oder bei Auftreten besonderer Betriebszustände des oder der Geräte eine Statusmeldung über den Gerätezustand an das mobile Endgerät übermittelt wird.

17. Kommunikationssystem nach einem der Ansprüche 1 bis 16, **dadurch gekennzeichnet, daß** in dem mobilen Endgerät und/oder in der Kontrolleinheit und/oder im Netz eine oder mehrere die Überwachung, Steuerung und/oder Regelung eines oder mehrerer Geräte betreffende Applikationen vorgesehen sind.

18. Kommunikationssystem nach Anspruch 17, **dadurch gekennzeichnet, dass** die Kontrolleinheit als Server ausgeführt ist, auf den mittels des mobilen Endgerätes zugreifbar ist und auf dem die Applikation abgelegt ist.

19. Kommunikationssystem nach Anspruch 18, **dadurch gekennzeichnet, dass** das mobile Endgerät einen Browser aufweist, mittels dessen auf die auf dem Server gespeicherte Applikation zugegriffen werden kann.

20. Kommunikationssystem nach Anspruch 18 oder 19, **dadurch gekennzeichnet, dass** auf den Server mittels Internet zugreifbar ist.

21. Kommunikationssystem nach Anspruch 17, **dadurch gekennzeichnet, dass** die Applikation auf dem mobilen Endgerät abgelegt ist.

22. Kommunikationssystem nach einem der vorhergehenden Ansprüche, **dadurch gekennzeichnet, dass** die Kontrolleinheit als embedded PC bzw. WEB-Server ausgeführt ist, auf dem eine oder mehrere die Überwachung, Steuerung und/oder Regelung eines oder mehrerer Geräte betreffende Applikationen abgelegt sind, und dass das mobile Endgerät einen Browser aufweist, wobei unter Verwendung der Applikationen in Verbindung mit Netzelementen eines Telekommunikationsnetzes mittels des Browsers das eine oder die mehreren Geräte steuerbar und/oder regelbar und/oder überwachbar sind.

23. Kommunikationssystem nach Anspruch 22, **dadurch gekennzeichnet, dass** die Steuerung/Regelung/Überwachung über Benutzeroberflächen aufgrund der Applikationen ermöglicht ist.

24. Kommunikationssystem nach einem der vorhergehenden Ansprüche, **dadurch gekennzeichnet, dass** die Kontrolleinheit als WEB-Server ausgeführt ist oder einen WEB-Server enthält, der die Ausführung von Java-Servlets ermöglicht.

25. Kommunikationssystem nach Anspruch 24, **dadurch gekennzeichnet, dass** die Java-Servlets derart ausgeführt sind, dass sie sowohl die Bearbeitung von http-requests von mobilen Endgeräten als auch die Einwirkung auf die Peripherie abwickeln.

26. Verfahren zur Datenübertragung, insbesondere zur Überwachung, Steuerung und/oder Regelung eines oder mehrerer Geräte, mittels eines in einem Telekommunikationsnetz eines Netzbetreibers betreibbaren mobilen Endgerätes, das die folgenden Schritte umfaßt:
Übertragung von Daten, insbesondere von die Überwachung, Steuerung und/oder Regelung des oder der Geräte betreffenden Daten, von dem oder den Geräten an eine Kontrolleinheit und/oder von der Kontrolleinheit an das oder die Geräte mittels Verkabelung oder drahtloser Übertragung,
Übertragung von Daten von der Kontrolleinheit an eine Kommunikationseinheit oder von der Kommunikationseinheit an die Kontrolleinheit, und Übertragung von Daten von der Kommunikationseinheit zu dem Netzbetreiber des Telekommunikationsnetzes oder von dem Netzbetreiber zu der Kommunikationseinheit,
Übertragung von Daten von dem Netzbetreiber an das mobile Endgerät auf der Grundlage der von der Kommunikationseinheit an den Netzbetreiber übertragenen Daten oder Übertragung von Daten von dem mobilen Endgerät an den Netzbetreiber, auf deren Grundlage Daten von dem Netzbetreiber an die Kommunikationseinheit übermittelt werden.

27. Verfahren nach Anspruch 26, **dadurch gekennzeichnet, daß** die Datenübertragung zwischen dem oder den Geräten und der Kontrolleinheit mittels Verkabelung, Bluetooth oder WLAN erfolgt.

28. Verfahren nach Anspruch 26 oder 27, **dadurch gekennzeichnet, daß** die Datenübertragung zwischen Kommunikationseinheit und dem Netzbetreiber über das Festnetz, per Mobilfunknetz, insbesondere nach dem GSM-, GPRSoder UMTS-Standard erfolgt.

29. Verfahren nach Anspruch 28, **dadurch gekennzeichnet, daß** die Datenübertragung zwischen Kommunikationseinheit und dem Netzbetreiber mittelbar, insbesondere unter Zwischenschaltung des Internet, erfolgt.

30. Verfahren nach Anspruch 29, **dadurch gekennzeichnet, daß** mittels eines Mobilfunknetzes, insbesondere mittels eines nach dem GPRS-Standard arbeitenden Mobilfunknetzes, eine Verbindung zwischen der Kommunikationseinheit und dem Internet sowie zwischen dem Internet und dem Netzbetreiber aufgebaut wird.

31. Verfahren nach Anspruch 28, **dadurch gekennzeichnet, daß** die Datenübertragung zwischen Kommunikationseinheit und dem Netzbetreiber unmittelbar mittels eines Mobilfunknetzes erfolgt.

32. Verfahren nach einem der Ansprüche 26 bis 31, **dadurch gekennzeichnet, daß** die Kommunikation zwischen dem Netzbetreiber und dem mobilen Endgerät mittels eines nach dem GSM-Standard arbeitenden Mobilfunknetzes erfolgt.

33. Verfahren nach einem der Ansprüche 26 bis 32, **dadurch gekennzeichnet, dass** die Kontrolleinheit als Server ausgeführt ist, auf den das mobile Endgerät zugreift und auf dem eine oder mehrere die Überwachung, Steuerung und/oder Regelung eines oder mehrerer Geräte betreffende Applikationen abgelegt sind.

34. Verfahren nach Anspruch 33, **dadurch gekennzeichnet, dass** das mobile Endgerät einen Browser aufweist, mittels dessen auf die auf dem Server gespeicherte Applikation zugegriffen wird.

35. Verfahren nach Anspruch 33 oder 34, **dadurch gekennzeichnet, dass** auf den Server mittels Internet zugegriffen wird.

36. Verfahren nach einem der Ansprüche 26 bis 32, **dadurch gekennzeichnet, dass** eine oder mehrere die Überwachung, Steuerung und/oder Regelung eines oder mehrerer Geräte betreffende Applikationen auf dem mobilen Endgerät abgelegt sind.

37. Verfahren nach einem der vorhergehenden Ansprüche, **dadurch gekennzeichnet, dass** die Kontrolleinheit als embedded PC bzw. WEB-Server ausgeführt ist, auf dem eine oder mehrere die Überwachung, Steuerung und/oder Regelung eines oder mehrerer Geräte betreffende Applikationen abgelegt sind, und dass das mobile Endgerät einen Browser aufweist, wobei mittels des Browsers die Steuerung und/oder Regelung und/oder Überwachung der einen oder mehreren Geräte durchgeführt wird und diese Durchführung durch die Applikationen in Verbindung mit Netzelementen eines Telekommunikationsnetzes ermöglicht wird.

38. Verfahren nach Anspruch 37, **dadurch gekennzeichnet, dass** die Steuerung/Regelung/Überwachung über Benutzeroberflächen aufgrund der Applikationen erfolgt.

39. Verfahren nach einem der vorhergehenden Ansprüche, **dadurch gekennzeichnet, dass** die Kontrolleinheit als WEB-Server ausgeführt ist oder einen WEB-Server enthält, mittels dessen Java-Servlets ausgeführt werden.

40. Verfahren nach Anspruch 39, **dadurch gekennzeichnet, dass** die Java-Servlets sowohl die Bearbeitung von http-requests von mobilen Endgeräten als auch die Einwirkung auf die Peripherie abwickeln.
